# EUROPEAN PATENT APPLICATION

(11) **EP 4 848 172 A1**
(43) Date of publication of application: **02.12.2026**
(21) Application number: 25179243.8
(22) Date of filing: 27.05.2025
(51) Int. Cl.: G06Q 10/083, G06Q 10/0834

(54) **AUTOMATIC FREIGHT DISPATCHING SYSTEM AND AUTOMATIC FREIGHT DISPATCHING METHOD**

(71) Applicant: Van, David, New Taipei City 220 (TW)
(72) Inventor: Van, David, New Taipei City 220 (TW)
(74) Representative: Straus, Alexander

(57) **Abstract**

An automatic freight dispatching system and a method thereof are provided. The system has a plurality of modules configured to receive transportation orders from client device(s), store the transportation orders, manage available transportation resources, sort part of the transportation orders to plan a transportation task, update the order statuses of the transportation orders of the transportation task, assign the transportation task to one of the business partners of the available transportation resources and receive corresponding assignment acceptance notification from the business partner device. The automatic freight dispatching system and a method thereof address concerns for poor arrangement of transportation resources, increase of transportation cost and low transport efficacy when dispatching transportation orders for third party transport operators.

## Description

### Field of the Invention

The present disclosure is related to transportation scheduling technique, particularly to an automatic freight dispatching system and an automatic freight dispatching method.

### Background of the Invention

In present freight transportation service ecosystem, transportation orders still rely on human efforts for dispatching due to having complex transportation requirements. For example, in order to optimistically satisfy transportation requirement of multiple transportation orders, transportation order managers are required to execute their own experience to evaluate and plan number and content of transportation orders in transportation tasks. This is not only a huge waste of human resources, but also potentially unfair and low efficacy in task dispatching due to opinioned or inconsistent standards of the transportation order managers.

Logistics industry is now facing challenges to complete all transportation orders solely using in-house fleet due to rapid growth of transportation requirement, and is in need of help from third party transport operators. However, existing transportation order dispatching methods often lacks consideration of transport efficacy of the third party transport operators, thus may result in poor arrangement of transportation resources, increase of transportation cost and low transport efficacy.

### Summary of the Invention

An automatic freight dispatching system operating within a computer system may include an order accepting module, a task planning module, a task dispatching module, a response receiving module, an order storage module and a resource management module. The order accepting module may be coupled with the Internet and may be configured to accept a plurality of transportation orders from a client device. The order storage module may be coupled with the order accepting module, may include an order pool, and may be configured to store the transportation orders into the order pool. The resource management module may be configured to access an available transportation resource and update the available transportation resource based on an assignment-accepted notification, the available transportation resource may include a plurality of business partners. The task planning module may be coupled with the order storage module and the resource management module, and may be configured to select and sort a portion of the transportation orders for planning a transportation task, and further update order statuses of the transportation orders of the transportation task in response to the assignment-accepted notification. The task dispatching module may be coupled with the Internet and the task planning module, and may be configured to send a notification to a business partner device to assign the transportation task to one of the business partners in the available transportation resource. The response receiving module may be coupled with the Internet and the resource management module, and may be configured to receive the assignment-accepted notification from the business partner device.

An automatic freight dispatching method may include receiving a plurality of transportation orders from a client at an automatic freight dispatching system, storing the transportation orders into an order pool, accessing an available transportation resource, the available transportation resource includes a plurality of business partners, selecting and sorting a portion of the transportation orders from the order pool to plan a transportation task, assigning the transportation task to one of the business partners via the Internet, and updating an order status of the transportation orders of the transportation task according to an assignment-accepted notification from the business partner being assigned with the transportation task.

The automatic freight dispatching system and method of the present disclosure may be used to implement automation and smart dispatching of transportation orders, cut down human resource requirement, and improve transportation efficacy. The present disclosure may also effectively consider transportation efficacy of third party transport operators during dispatching of transportation orders to improve overall transportation efficiency of logistics.

### Brief Description of the Drawings

FIG.1 is a schematic structural diagram of an automatic freight dispatching system according to some embodiments of the present disclosure.
FIG. 2 is a flow chart of an automatic freight dispatching method according to some embodiments of the present disclosure.
FIG. 3 is a scenario diagram of planning a transportation task according to some embodiments of the present disclosure.
FIG. 4A is a first scenario of planning and dispatching a transportation task according to some embodiments of the present disclosure.
FIG. 4B is a second scenario of planning and dispatching a transportation task according to some embodiments of the present disclosure.
FIG. 4C is a third scenario of planning and dispatching a transportation task according to some embodiments of the present disclosure.
FIG. 4D is a fourth scenario of planning and dispatching a transportation task according to some embodiments of the present disclosure.

### Detailed Description

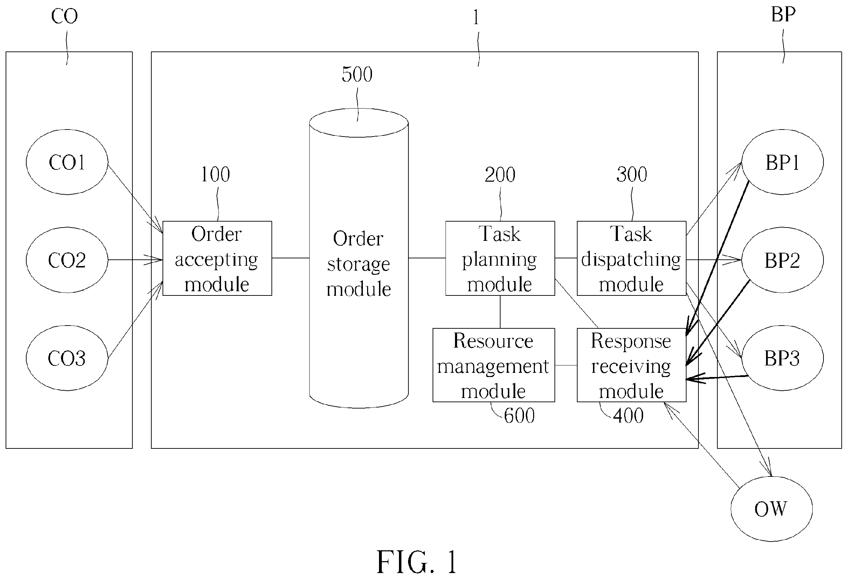

As shown in FIG. 1, an automatic freight dispatching system 1 having an order accepting module 100, a task planning module 200, a task dispatching module 300, a response receiving module 400, an order storage module 500 and a resource management module 600. The automatic freight dispatching system 1 may be operating within a computer system and may be used to interact with a plurality of clients CO (exempli gratia, different clients CO1, CO2 and CO3), business partners BP (exempli gratia, different business partners BP1, BP2, and BP3), and in-house fleet OW through the Internet. To complete automatic freight dispatching, clients CO may place the transportation orders to the automatic freight dispatching system 1 through the Internet, a transportation task may be assembled by the automatic freight dispatching system 1 using the transportation orders upon analysis, the transportation task may be sent by the automatic freight dispatching system 1 to the business partner BP or the in-house fleet OW, the business partner BP may then decide to accept the transportation task or the in-house fleet OW may be directly assigned with the transportation task. The clients CO (client devices), the business partners BP (business partner devices), and the in-house fleet OW (in-house fleet device) may be realized as arbitrary computing device, apparatus or mobile devices, users of the clients CO, the business partners BP and the in-house fleet OW may enroll with the automatic freight dispatching system 1 and access automatic freight dispatching service through the automatic freight dispatching system 1 through a corresponding application or website. Users of the clients CO may include but not limited to: an organization or an individual with freight transportation needs; user of the business partner BP may include but not limited to: an organization or an individual providing freight transporting services; user of the in-house fleet OW may include but not limited to: an organization or an individual managed by operator or related parties of the automatic freight dispatching system 1 to provide freight transporting services. The elements of the automatic freight dispatching system 1 may be coupled with each other through a wired or a wireless manner, and modules of the automatic freight dispatching system 1 may be realized through at least one of a mainframe computer, a personal computer, a tablet, a mobile device, a storage device, a cloud storage device, an application, a server, and a virtual machine.

The order accepting module 100 may be coupled with the Internet and may be used to receive a plurality of transportation orders from the client CO. The transportation orders may be filled with transportation requirement information such as but not limited to: transportation origin, transportation destination, transportation time, transportation payment, designated transportation personnel, designated transportation company, designated transportation vehicle type, freight information (exempli gratia, freight type, freight weight, freight size, freight volume, or freight quantity), client level, et cetera. The order accepting module 100 may receive and send the transportation orders to the order storage module 500 for later operation.

In some embodiments, the original order placed by the clients CO may describe a collecting point, a delivery point and freight information. The order accepting module 100, after receiving the original order, may split the original order into sections of sub-orders corresponding to different transportation sections (routes) respectively. The sub-orders may then be sent to order storage module 500. The splitting of the original order may be based on factors such as location (exempli gratia, requirement to pass through transshipment points, cargo collection points, airports, ports, warehouses, et cetera, or requirement to avoid heavy truck prohibited road sections), time (exempli gratia, requirements to avoid peak traffic periods or heavy truck driving prohibited periods), transportation flexibility (exempli gratia, requirement to transport by separate vehicles or by same vehicle through separate trips), and special transportation conditions (exempli gratia, requirement of cold chain goods being delivered as soon as possible, or requirement of dangerous goods being delivered in restricted transportation routes and time windows), or the like mentioned in the original order.

For example, an original order (collecting point is Taoyuan City, delivery point is Kaohsiung City, and freight information is paper goods) may be split into four sub-orders such as a first sub-order (paper goods are collected at Taoyuan city and sent to Taoyuan collection point in a room temperature delivery vehicle), a second sub-order (paper goods are sent from the Taoyuan collection point to Tainan transfer point in a room temperature delivery vehicle), a third sub-order (a first batch of paper goods are sent from the Tainan transfer point to delivery point at Kaohsiung City in a room temperature delivery vehicle), and a fourth sub-order (a second batch of paper goods are sent from the Tainan transfer point to delivery point at Kaohsiung City in a room temperature delivery vehicle). The sub-orders split from the original order is beneficial in improving similarities between orders in the order pool (exempli gratia, making the orders in the order pool to have same or approximated origins or destinations), so as to facilitate chances of forming consolidated transportation of goods or forming return trip transport with main trip transport.

The order storage module 500 may be coupled with the order accepting module 100 and may include at least one storage area being configured as order pool. The transportation orders from the order accepting module 100 may be stored in the order pool.

In some embodiments, newly generated transportation orders are not stored into the order pool in real-time, but instead stored in another storage area (order repository) first before being added to the order pool when a condition is satisfied. The condition for adding the transportation order into the order pool may include but not limited to: transportation orders may be added to the order pool only on a system default time (exempli gratia, only at 1:00 am every day or 19:00 pm at every Sunday), a sub-order of an original order may be added to the order pool when another sub-order of the same original order before the sub-order is completed, the transportation order may be added to the order pool when a collecting time/delivery time specified on the transportation order is close (exempli gratia, three days/five days/24 hours from the specified collecting time/delivery time), a transportation order may be added to the order pool when other transportation orders with higher priority are completed, a transportation order may be added to the order pool during certain prohibited transportation period (exempli gratia, weekdays) for executing the transportation order, et cetera.

The task planning module 200 may be coupled with the order storage module 500 and may be used to add transportation orders into the order pool based on the conditions described above, and select and sort a portion of the transportation orders from the order pool to plan a transportation task. For example, the order storage module 500 may have a plurality of to-be-executed transportation orders stored in the order pool, the task planning module 200 may analyze the plurality pieces of transportation requirement information of the transportation orders in the order pool, and select, sort, and assemble the transportation orders with related transportation requirement information into a transportation task. The task planning module 200 may further update order statuses of the transportation orders of the transportation task in the order pool in response to the transportation task being accepted/confirmed by a business partner BP or in-house fleet OW. For example, when the task planning module 200 receives an assignment-accepted notification from the business partner BP/assignment-confirmed notification from the in-house fleet OW regarding to a transportation task, the task planning module 200 may update the order statuses of the transportation order corresponding to the transportation task in the order pool to be "task assigned." Further, the task planning module 200 may, when detecting that a default response time has been exceeded without receiving the assignment-accepted/assignment-confirmed notification or receiving an assignment-denied notification regarding the transportation task, reassign the transportation task to other business partners BP or in-house fleet OW. Moreover, the task planning module 200, may, when detecting that the assignment-denied notification has been received or the default response time has been exceeded without receiving the assignment-accepted/assignment-confirmed notification regarding the transportation task and no other transportation resource is available for taking on the transportation task, return the transportation orders that formed the transportation task and analyze the order pool again to plan a new transportation task.

The task planning module 200 may be used to assemble multiple transportation orders into one single transportation task, while the multiple transportation orders forming the transportation task may be related in respect of transportation requirement information. For example, when a transportation task includes a first transportation order and a second transportation order behind the first transportation order, a distance between a transportation origin of the second transportation order and a transportation destination of the first transportation order may be less than a maximum allowable distance (exempli gratia, 30 kilometers), an estimated traveling time for said distance may be less than a maximum allowable time (exempli gratia, 60 minutes), and/or a first traveling direction of the first transportation order (outbound trip) may be the opposite of the second traveling direction of the second transportation order (return trip). The above allowable values for the maximum allowable distance/time may be adjusted according to requirement or scenario for implementation, and is not meant to limit the present disclosure. Accordingly, one round trip of the transportation task may be fully utilized for transportation of freights, and efficacy of dispatching transportation of freights may thus be improved. In another example, with respect to compatibility, when one piece of transportation order in a transportation task has specified a designated transportation personnel, a transportation company, a transportation vehicle type, or a specific client level of the client, the other transportation orders contained in the same transportation task should also be compatible to the specified transportation requirement information (exempli gratia, all transportation orders in the transportation task are related to cold chain transportation or oil transportation). Accordingly, the plurality of transportation orders in a same transportation task may be executed by the same vehicle and/or the same driver.

The task dispatching module 300 may be coupled with the Internet, the business partners BP, the in-house fleet OW, and the task planning module 200, and may be used to send notification and ask the business partner BP regarding willingness of accepting assignment of the transportation task or send notification and order the in-house fleet OW to confirm the assignment of the transportation task. Here, the transportation requirement information of the transportation task may be determined by the transportation requirement information of the transportation order composing the transportation task, such as union of necessary factors, intersection of factors or exclusion of optional factors of the transportation requirement information of the transportation orders. Therefore, the task dispatching module 300 may send the transportation task to those in the business partners BP that meet the transportation requirement information of the transportation task. For example, when the transportation requirement information of the transportation task asks for transportation service by a light truck under an I transportation group, the task dispatching module 300 may be configured to assign the transportation task to the business partners BP meeting the described transportation requirement information. In another example, when the transportation requirement information of the transportation task asks for transportation service by Driver Lin of a J transportation company, the task dispatching module 300 may be configured to assign the transportation task to the business partners BP meeting the described transportation requirement information. Further, the task dispatching module 300 may send notification to the business partner BP and/or the in-house fleet OW in a one-to-one manner (id est, one transportation task is assigned to one eligible business partner BP/in-house fleet OW at a time) or a one-to-many manner (id est, one transportation task is assigned to multiple eligible business partners BP/in-house fleets OW at a time).

In some embodiments, each module of the automatic freight dispatching system 1 may respectively include one or more sub-modules being used to implement a complete or advanced function of the corresponding module. For example, if functionality of a module may be implemented through three steps or computations, three sub-modules may be disposed to perform those three steps or computations respectively. In another example, if a given function of an arbitrary module may be achieved through two implementation schemes, two sub-modules may be configured to perform steps or computations of these two implementation schemes respectively.

Response receiving module 400 may be coupled with the task planning module 200 and the resource management module 600 and may be used to receive multiple responses from the business partners BP or the in-house fleet OW regarding assignment through the Internet. In some embodiments, when the business partner BP responses with an assignment-accepted notification or an in-house fleet OW responses with an assignment-confirmed notification regarding a transportation task, the response receiving module 400 may notify the resource management module 600 to update available transportation resource and complete automatic dispatching of the transportation task. When notification subject of the transportation task responses assignment-denied notification or is un-response, the response receiving module 400 may notify the resource management module 600 and the task planning module 200 to reassign the transportation task. Further, when the business partner BP partially accepts the transportation task, the response receiving module 400 may notify the resource management module 600 and the task planning module 200 regarding the accepted portion of the transportation task (exempli gratia, one piece of accepted transportation order in the transportation task), and the task planning module 200 may analyze the unaccepted portion of the transportation task and the order pool to reassign a new transportation task. Moreover, when there are multiple requesters of business partners BP and in-house fleets OW expressing willingness to accept the same transportation task, the response receiving module 400 may select an earliest requester or a requester with the highest score from the multiple business partners BP and in-house fleets OW to take on the transportation task, and notify the resource management module 600 to update the available transportation resource.

The resource management module 600 may be coupled with the task planning module 200 and may be used to acquire, manage and update the available transportation resource. The available transportation resource may include a plurality of business partners BP and in-house fleets OW enrolling for using service of the automatic freight dispatching system 1. The resource management module 600 may determine a priority level of each business partner BP and the in-house fleet OW for assigning the transportation task based on demand (exempli gratia, a transportation requirement or a default dispatching strategy) or scoring (exempli gratia, score for a driver or fleet). For example, an inclusive order of the business partners BP and in-house fleets OW may be used for assigning a single transportation task. In another example, a shared order of the business partners BP and in-house fleets OW may be used for assigning multiple transportation tasks. The scoring to the business partners BP and in-house fleets OW may be determined based on reviews of the clients CO regarding the completed transportation tasks and/or reviews of operators of the automatic freight dispatching system 1 regarding working performances of the business partners BP and the in-house fleets OW. Further, the resource management module 600 may update the available transportation resource based on each assignment of the transportation task. For example, when a transportation task is indeed assigned to a business partner BP or in-house fleet OW, the resource management module 600 may mark or remove the business partner BP or in-house fleet OW in the available transportation resource to avoid redundant assignment of other transportation tasks to this business partner BP or in-house fleet OW.

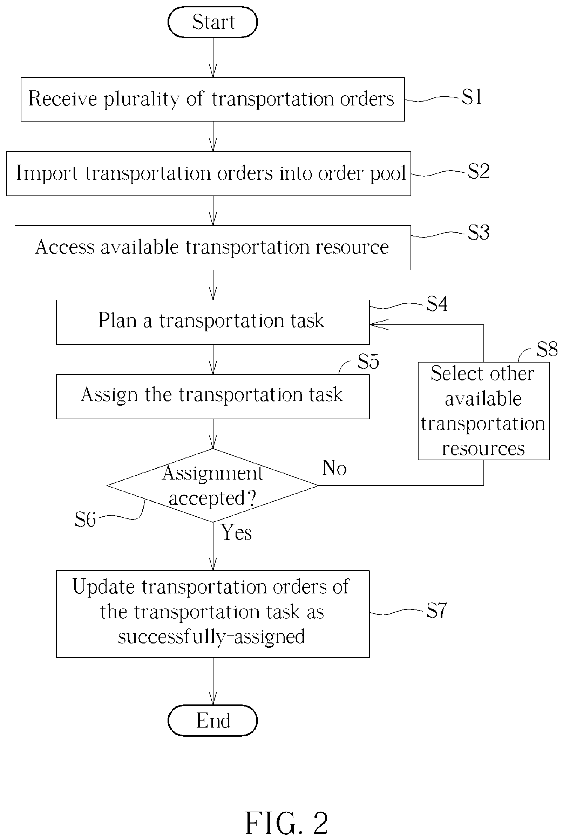

Please refer to FIGs. 2, 3 and 4A to 4D. For the purpose of illustrating the embodiments of the present disclosure, the following description will explain, in conjunction with the illustrated transport task scenarios, the process of implementing an automatic freight dispatching method through components of the automatic freight dispatching system 1.

At step S1, the order accepting module 100 may receive a plurality of transportation orders from the clients CO.

At step S2, the order storage module 500 may take the transportation orders from the order accepting module 100 and import into the order pool.

At step S3, the resource management module 600 may acquire available transportation resource including a plurality of business partners BP and in-house fleet OW. The business partners BP and the in-house fleet OW in the available transportation resource may be sorted ahead based on a ranking, where the business partners BP are default to have a higher priority level than the in-house fleet OW.

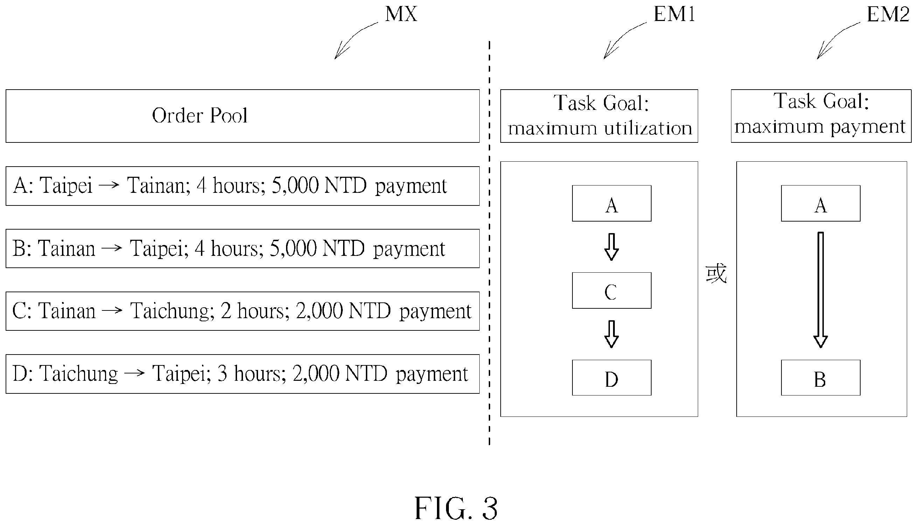

At step S4, the task planning module 200 may select, sort, and plan the transportation task based on a portion of transportation orders in the order pool. For example, in the scenario shown in FIG. 3, four transportation orders, id est, "Order A: ship from Taipei to Tainan; time required: 4 hours; payment: 5,000 New Taiwan dollar (NTD)," "Order B: ship from Tainan to Taipei; time required: 4 hours; payment: 5,000 New Taiwan dollar (NTD)," "Order C: ship from Tainan to Taichung; time required: 2 hours; payment: 2,000 New Taiwan dollar (NTD)," and "Order D: ship from Taichung to Taipei; time required: 3 hours; payment: 2,000 New Taiwan dollar (NTD)," are added into the order pool MX.

Further, when planning a transportation task, the task planning module 200 may set the Order A as outbound trip (first transportation order), while at least one of the Order B, C and D (second transportation order) may be arranged behind the Order A to form the transportation task. Moreover, the task planning module 200 may compute possible assembling options for forming the transportation task based on requirements to satisfy conditions of (1) maximum utilization of transportation personnel and/or (2) maximum payment from a single roundtrip of the transportation task.

In the embodiments described herein, the utilization of a transportation personnel defines the portion of actual on duty time of the transportation personnel with respect to the total working hours in one day. The definition of such may be described in the equation below: $\begin{matrix}utilization of transportation personnel f \left(x\right) = \\ \frac{high efficacy working time + low efficacy working time}{total working hours of the day} \times 100 % ,\end{matrix}$ equation (1).

Here, the high efficacy working time represents the actual time of the transportation personnel executing the transportation task, the low efficacy working time represents the processing time (exempli gratia, the time spent on loading/unloading freights and inspection) before/after the transportation task is being carried out, while other periods besides from the high efficacy working time and the low efficacy working time during the total working hours of the transportation personnel are deemed as non-productive task time (exempli gratia, the time spent for moving from an destination of a previous transportation order to a origin of a next transportation order, from depot to origin of a particular transportation order, or an destination of the transportation order to the depot, et cetera). Therefore, transportation personnel may be regarded to be of high utilization (high work efficacy) when his/her high efficacy working time and low efficacy working time (the actual time of executing the transport task) takes up a large portion in the total working hours.

In the scenario EM1 shown in FIG. 3, when a longest working hour of a day is set as 9 hours, and transportation task is set to be assembled to meet a maximum utilization of the transportation personnel, the task planning module 200 may select at least two pieces of transportation orders from the order pool MX according to their transportation requirement information, assemble the selected transportation orders to form the transportation task, and allow the total transportation time in the transportation task to approximate the longest working hour of the transportation personnel. In other words, by using the transportation orders in the order pool MX, the transportation task formed in the scenario EM1 may be formed by Order A (with transportation time of 4 hours), Order C (with transportation time of 2 hours) and Order D (with transportation time of 2 hours), such that the total transportation time during the transportation task may be closest to the total working hours (9 hours), and the total payment from the transportation task is calculated to be 9,000 New Taiwan dollar (NTD).

In the scenario EM2 shown in FIG. 3, when a transportation task is set to be assembled to garner a maximum payment from a single round trip, the task planning module 200 may select at least two pieces of transportation orders from the order pool MX, assemble the selected transportation orders to form the transportation task, and allow the total payment from the transportation task to be highest compared to other assembling options. In other words, by using the transportation orders in the order pool MX, the transportation task formed in the scenario EM2 may be formed by Order A (with payment of 5,000 New Taiwan dollar (NTD)) and Order B (with payment of 5,000 New Taiwan dollar (NTD)), such that the total payment of the assembled transportation task may come to 10,000 New Taiwan dollar (NTD) which surpasses the total payment of 9,000 New Taiwan dollar (NTD) presented in scenario EM1.

In a more complicated assembling scenario, the assembling of the transportation task may be computed through comprehensive considerations to reach maximum utilization of transportation personnel and maximum payment, so as to obtain an optimal assembly of the transportation task. For example, when the transportation task is mainly set to be assembled to satisfy the maximum utilization of the transportation personnel, and a handful of assembling options are available to meet this requirement, the assembling option that garners the highest payment may be selected to be the optimal solution. In another example, when the transportation task is mainly set to be assembled to garner a maximum payment from a single round trip, and a handful of assembling options are available to meet this requirement, the assembling option that reaches the best utilization of the transportation personnel may be selected to be the optimal solution.

At step S5, the task dispatching module 300 may assign the transportation task from the task planning module 200 to one of the plurality of business partners BP and the in-house fleet OW. Here, the task dispatching module 300 may analyze the transportation requirement information of the transportation task and assign the transportation task to the business partner BP or in-house fleet OW in the available resource meeting the transportation requirement information. For example, when transportation requirement information of the Order A in FIG. 3 asks for transportation carried out by a light truck, the clients CO placing the Order A is a gold-level client, and the business partner BP is set to have a higher priority level than the in-house fleet OW, the task dispatching module 300 may thus assign the transportation task to the business partner BP that owns a gold-level fleet with light trucks in region of Taipei.

At step S6, the response receiving module 400 may detect response from the business partner BP and the in-house fleet OW and determine assigning result of the transportation task. If an assignment-accepted notification or an assignment-confirmed notification is received at the response receiving module 400, the transportation task may be deemed to be successfully assigned (the detection result is "Yes" at step S6) and step S7 may be executed. On the other hand, if an assignment-denied notification is received at the response receiving module 400 or the response receiving module 400 has failed to receive a response after a predetermined response time, the transportation task may be deemed to be unsuccessfully assigned (the detection result is "No" at step S6) and step S8 may be executed.

At step S7, the response receiving module 400 may instruct the resource management module 600 to update the available transportation resource and notify the task planning module 200 to update the order pool of the order storage module 500.

At step S8, the response receiving module 400 may instruct the automatic freight dispatching system 1 to execute step S4 to S6 in a new cycle to re-sequence and reassign transportation task. For example, when the response receiving module 400 confirmed at step S6 of the (N)th cycle that a transportation task is not accepted by any of the business partners BP, the task planning module 200 may instead instruct the task dispatching module 300 to assign the unaccepted transportation task to the in-house fleet OW at step S5 of a (N+1)th cycle. In another example, when the response receiving module 400 confirmed at step S6 of a (M)th cycle that a transportation task is not/cannot be accepted by the current available transportation resource, the task planning module 200 may return the transportation task (cancel the assembly of transportation orders in the transportation task) at step S4 of the (M+1)th cycle and analyze the order pool to re-assemble and re-assign a new transportation task to the business partners BP or in-house fleet OW.

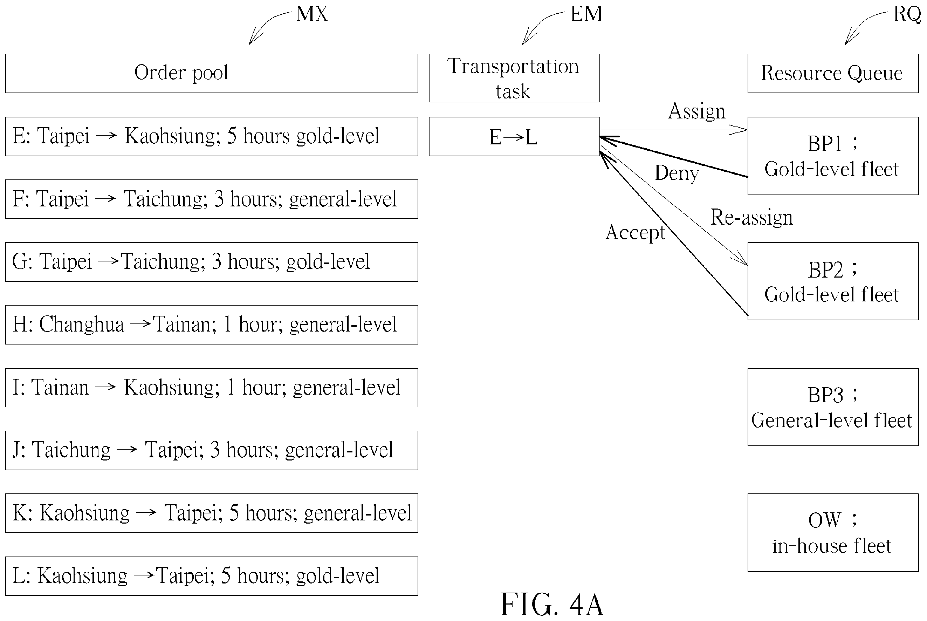

In some freight dispatching scenarios, the available transportation resource can only process a limited number of transportation orders at a unit time (exempli gratia, one day), and the automatic freight dispatching system 1 may be configured to repeatedly perform the step S1 to S8 until the specified number of transportation orders are all successfully dispatched before receiving new transportation orders. Such scenario utilizing step S1 to S8 may be processed with reference to FIGs. 4A to 4D. Here, the order pool MX is assumed to have transportation orders of the following: "Order E: ship from Taipei to Kaohsiung; time required: 5 hours; initiated by gold-level client," "Order F: ship from Taipei to Taichung; time required: 3 hours; initiated by general-level client," "Order G: ship from Taipei to Taichung; time required: 3 hours; initiated by gold-level client," "Order H: ship from Changhua to Tainan; time required: 1 hours; initiated by general-level client," "Order I: ship from Tainan to Kaohsiung; time required: 1 hours; initiated by general-level client," "Order J: ship from Taichung to Taipei; time required: 3 hours; initiated by general-level client," "Order K: ship from Kaohsiung to Taipei; time required: 5 hours; initiated by general-level client," and "Order L: ship from Kaohsiung to Taipei; time required: 5 hours; initiated by gold-level client," while the available transportation resource is assumed to have the following in the resource queue RQ: "a gold-level fleet of the business partner BP1," "a gold-level fleet of the business partner BP2," "a general-level fleet of the business partner BP3," and "a general-level fleet of the in-house fleet OW."

The scenario EM of FIG. 4A may be described below:
1. The task planning module 200 may generate a transportation task containing Order E and Order L based on a predetermined guideline.
2. Since Order E and Order L are placed by clients CO of gold-level, the task dispatching module 300 may assign the transportation task to "gold-level fleet of the business partner BP1" in the resource queue RQ, which is determined by the task dispatching module 300 to have a higher priority level in the resource queue RQ.
3. The response receiving module 400 may notify the resource management module 600 and the task planning module 200 in response to reiceving an assignment-denied notification from the business partner BP1.
4. The task planning module 200 determined that there is still a "gold-level fleet of business partner BP2" in the available transportation resource available for accepting the transportation task, resulting in the transportation task being pushed to the "gold-level fleet of business partner BP2" to inquire willingness of accepting the transportation task.
5. The response receiving module 400 may notify the resource management module 600 and the task planning module 200 in response to receiving an assignment-accepted notification from the "gold-level fleet of business partner BP2," where the order statuses of Order E and Order L in the order pool MX have been updated as successfully-assigned, said transportation orders may also be removed from the order pool MX, the working status of the business partner BP2 has been updated as "on-duty," and business partner BP2 may also be removed from the resource queue RQ.

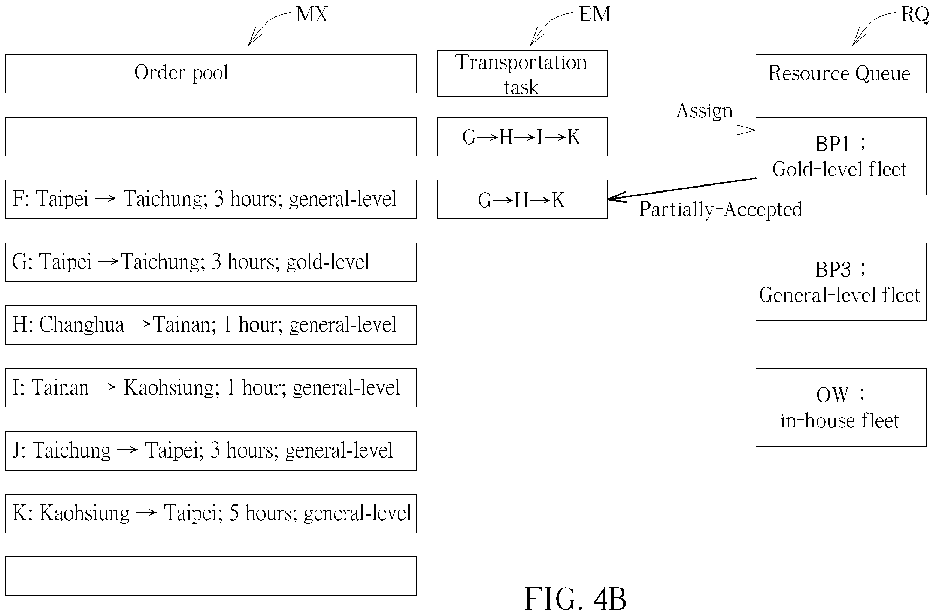

The scenario EM of FIG. 4B may be described below:
1. The task planning module 200 may generate a transportation task containing Order G, Order H, Order I and Order K.
2. Since Order G are placed by clients CO of gold-level, the task dispatching module 300 may assign the transportation task to the "gold-level fleet of business partner BP1" in the resource queue RQ, the "gold-level fleet of business partner BP1" has a higher priority level in the resource queue RQ.
3. The response receiving module 400 may notify the resource management module 600 and the task planning module 200 in response to receiving an assignment-partially-accepted notification from the "gold-level fleet of business partner BP1," where the order statuses of the partially accepted Order G, Order H and Order K have been updated as "successfully-assigned," said transportation orders are removed from the order pool MX, working status of the business partner BP1 has been updated as "on-duty," and business partner BP1 is also removed from the resource queue RQ.

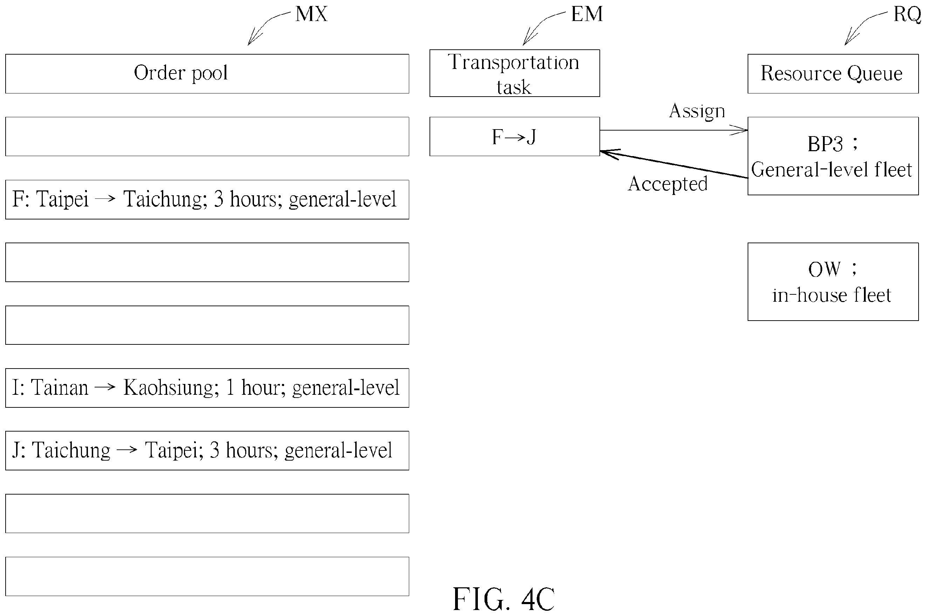

The scenario EM of FIG. 4C may be described below:
1. The task planning module 200 may generate a transportation task containing Order F and Order J.
2. Since Order F and Order J are placed by clients CO of general-level, the task dispatching module 300 may assign the transportation task to the "general-level fleet of business partner BP3," which is determined by the task dispatching module 300 to have a higher priority level in the resource queue RQ.
3. The response receiving module 400 may notify the resource management module 600 and the task planning module 200 in response to receiving an assignment-accepted notification from the business partner BP3, where the order status of Order F and Order J have been updated as "successfully-assigned," said transportation orders are also removed from the order pool MX, the working status of the "general-level fleet of business partner BP3" has been updated as "on-duty," and business partner BP3 is also removed from the resource queue RQ.

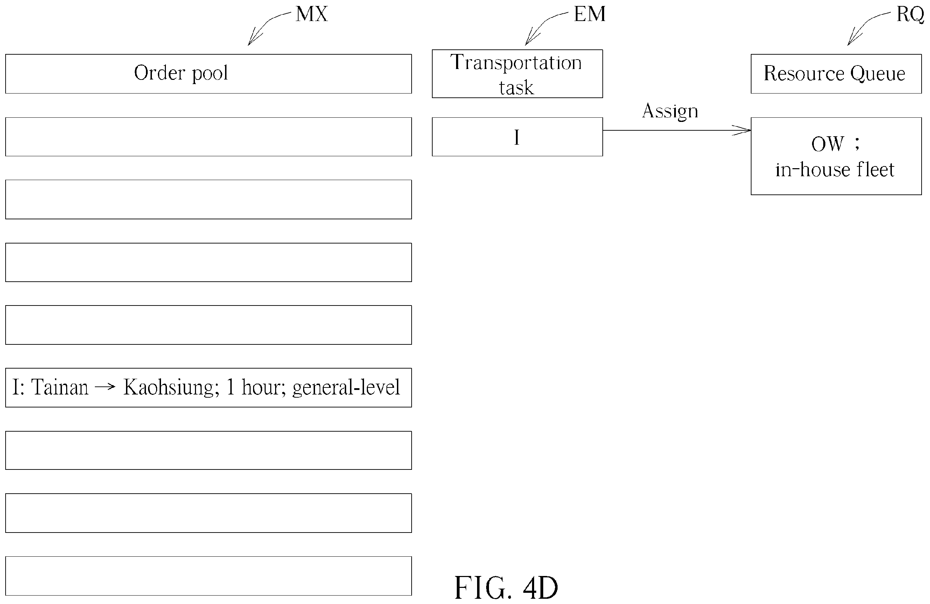

The scenario EM of FIG. 4D may be described below:
1. The task planning module 200 may generate a transportation task containing the sole remaining Order I in the order pool MX.
2. Since resource queue RQ is only left with in-house fleet OW, the task dispatching module 300 may assign the transportation task to the in-house fleet OW, and the in-house fleet OW is configured to accept the transportation task by obligation.

The automatic freight dispatching system and method of the present disclosure may be used to realize centralized management of accepting and dispatching large number of transportation orders based on requirements of an operator without human-induced influences. Therefore, the transportation orders may be automatically dispatched to all business partners (third party transport operators) in a fair and efficient manner.

## Claims

1. An automatic freight dispatching system (1) operating within a computer system and comprising:
an order accepting module (100) coupled with the Internet and configured to accept a plurality of transportation orders from a client device;
an order storage module (500) coupled with the order accepting module (100), comprises an order pool (MX), and configured to store the transportation orders into the order pool (MX);
a resource management module (600) configured to access an available transportation resource and update the available transportation resource based on an assignment-accepted notification, wherein the available transportation resource comprises a plurality of business partners (BP);
a task planning module (200) coupled with the order storage module (500) and the resource management module (600), and configured to select and sort a portion of the transportation orders for planning a transportation task, and further update order statuses of the transportation orders of the transportation task in response to the assignment-accepted notification;
a task dispatching module (300) coupled with the Internet and the task planning module (200), and configured to send a notification to a business partner device to assign the transportation task to one of the business partners (BP) in the available transportation resource; and
a response receiving module (400) coupled with the Internet and the resource management module (600), and configured to receive the assignment-accepted notification from the business partner device.

2. The automatic freight dispatching system (1) of claim 1, wherein:
the task planning module (200) is further configured to analyze a plurality of pieces of transportation requirement information of the transportation orders in the order pool (MX), and select and sort, from the order pool (MX), the transportation orders related to the transportation requirement information to assemble the transportation orders into the transportation task;
the task dispatching module (300) is further configured to assign the transportation task to the one of the business partners (BP) meeting the transportation requirement information;
the transportation task comprises a first transportation order and a second transportation order sequenced after the first transportation order, wherein a distance between a transportation origin of the second transportation order and a transportation destination of the first transportation order is less than a maximum allowable distance, or an estimated traveling time between the transportation origin of the second transportation order and the transportation destination of the first transportation order is less than a maximum allowable time; or
the task planning module (200) is configured to select, based on the transportation requirement information, the transportation orders from the order pool (MX), such that a total transportation time of the transportation orders approximates a maximum working hour of transportation personnel of the business partner (BP), and/or a total transportation payment of the transportation orders achieves a maximum payment.

3. The automatic freight dispatching system (1) of claim 1 or 2, wherein:
the response receiving module (400) is further configured to receive an assignment-denied notification from one of the business partners (BP) or detect that a default response time has been exceeded without receiving the assignment-accepted notification; and
the task planning module (200) is further configured to update the order statuses of the transportation orders of the transportation task to be successfully-assigned in response to the assignment-accepted notification, or assign the transportation task to another one of the business partners (BP) in response to the assignment-denied notification or the detection that the default response time has been exceeded without receiving the assignment-accepted notification.

4. The automatic freight dispatching system (1) of claim 3, wherein:
the resource management module (600) is further configured to sort the business partners (BP) in the available transportation resource according to priority levels;
the task planning module (200) is further configured to assign the transportation task to the one of the business partners (BP) with a higher priority level in response to the assignment-accepted notification, and assign the transportation task to the another one of the business partners (BP) with a lower priority level in response to the assignment-denied notification or the detection that the default response time has been exceeded without receiving the assignment-accepted notification; or
the task planning module (200) is further configured to assign the transportation task to an in-house fleet or return the transportation order in response to the assignment-denied notification or the detection that the default response time has been exceeded without receiving the assignment-accepted notification.

5. The automatic freight dispatching system (1) according to any one of claims 1-4, wherein:
the task dispatching module (300) is further configured to push the transportation task to the plurality of the business partners (BP) and inquire the plurality of the business partners (BP) regarding willingness of accepting assignment of the transportation task; and
the response receiving module (400) is further configured to receive the assignment-accepted notification from earliest requester of the plurality of the business partners (BP) requesting for accepting the transportation task.

6. The automatic freight dispatching system (1) according to any one of claims 1-4, wherein:
the order accepting module (100) is further configured to split an original order from the client device into a plurality of sub-orders to act as the plurality of transportation orders; or
the order storage module (500) comprises at least one storage area, and the at least one storage area is configured as the order pool (MX).

7. The automatic freight dispatching system (1) according to any one of claims 1-4, wherein:
the task dispatching module (300) is further configured to determine transportation requirement information of the transportation task according to a plurality of pieces of transportation requirement information of the transportation orders composing the transportation task; and
the transportation task is assigned to one of the business partners (BP) meeting the transportation requirement information of the transportation task.

8. An automatic freight dispatching method comprising:
receiving a plurality of transportation orders from a client at an automatic freight dispatching system (1);
storing the transportation orders into an order pool (MX);
accessing an available transportation resource, wherein the available transportation resource comprises a plurality of business partners (BP);
selecting and sorting a portion of the transportation orders from the order pool (MX) to plan a transportation task;
assigning the transportation task to one of the business partners (BP) via the Internet; and
updating an order statuses of the transportation orders of the transportation task in response to an assignment-accepted notification from the business partner (BP) being assigned with the transportation task.

9. The automatic freight dispatching method of claim 8, wherein:
selecting and sorting the portion of the transportation orders from the order pool (MX) for planning the transportation task comprises:
at the automatic freight dispatching system (1), analyzing a plurality of pieces of transportation requirement information of the transportation orders in the order pool (MX); and
selecting and sorting, from the order pool (MX), the transportation orders related to the transportation requirement information to assemble the transportation orders into the transportation task; and
assigning the transportation task to the one of the business partners (BP) via the Internet comprises:
at the automatic freight dispatching system (1), assigning the transportation task to the one of the business partners (BP) meeting the transportation requirement information.

10. The automatic freight dispatching method of claim 9, wherein:
the transportation task comprises a first transportation order and a second transportation order sequenced after the first transportation order;
a distance between a transportation origin of the second transportation order and a transportation destination of the first transportation order is less than a maximum allowable distance, or an estimated traveling time between the transportation origin of the second transportation order and the transportation destination of the first transportation order is less than a maximum allowable time;
selecting and sorting, from the order pool (MX), the transportation orders related to the transportation requirement information to assemble the transportation orders into the transportation task comprises:
at the automatic freight dispatching system (1), selecting, based on the transportation requirement information, the transportation orders from the order pool (MX), wherein a total transportation time of the transportation orders approximates a maximum working hour of transportation personnel of the business partner or a total transportation payment of the transportation orders achieves a maximum payment; and/or
a first traveling direction of the first transportation order is opposite of a second traveling direction of the second transportation order.

11. The automatic freight dispatching method according to any one of claims 8-10, further comprising:
at the automatic freight dispatching system (1), updating the order statuses of the transportation orders of the transportation task to be successfully-assigned in response to the assignment-accepted notification from the business partner; and
assigning the transportation task to another one of the business partners (BP) in response to an assignment-denied notification or the detection that the default response time has been exceeded without receiving the assignment-accepted notification.

12. The automatic freight dispatching method of claim 11, wherein:
accessing the available transportation resource comprises:
at the automatic freight dispatching system (1), sorting the business partners (BP) in the available transportation resource according to a priority level;
assigning the transportation task to the one of the business partners (BP) via the Internet comprises:
at the automatic freight dispatching system (1), assigning the transportation task to the one of the business partners (BP) with a higher priority level; and
assigning the transportation task to another one of the business partners (BP) comprises:
at the automatic freight dispatching system (1), assigning the transportation task to the another one of the business partners (BP) with a lower priority level.

13. The automatic freight dispatching method of claim 11, further comprising:
at the automatic freight dispatching system (1), assigning the transportation task to an in-house fleet or returning the transportation order in response to the assignment-denied notification or the detection that the default response time has been exceeded without receiving the assignment-accepted notification;
at the automatic freight dispatching system (1), pushing the transportation task to the plurality of the business partners (BP) and inquiring the plurality of the business partners (BP) regarding willingness of accepting assignment of the transportation task; and/or
receiving the assignment-accepted notification from earliest requester of the business partners (BP) requesting when the business partners (BP) request for accepting the transportation task.

14. The automatic freight dispatching method according to any one of claims 8-10, further comprising:
at the automatic freight dispatching system (1), splitting an original order from the client device into a plurality of sub-orders to act as the plurality of transportation orders; and
at the automatic freight dispatching system (1), configuring at least one storage area as the order pool (MX).

15. The automatic freight dispatching method according to any one of claims 8-10, further comprising:
determining transportation requirement information of the transportation task according to a plurality of pieces of transportation requirement information of the transportation orders composing the transportation task; and
assigning the transportation task to one of the business partners (BP) meeting the transportation requirement information of the transportation task.
